Europäisches Patentamt

European Patent Office

Office européen des brevets

(19)

(11) Veröffentlichungsnummer: **0 093 842**
**B1**

(12) **EUROPÄISCHE PATENTSCHRIFT**

(45) Veröffentlichungstag der Patentschrift:
31.07.85

(21) Anmeldenummer: 83101587.0

(22) Anmeldetag: 19.02.83

(51) Int. Cl.⁴: **F 01 N 1/10**, F 16 L 55/02

(54) Geräuschdämpfer für Ventileinrichtungen in Druckluft-Bremsanlagen.

(30) Priorität: 06.05.82 DE 3216914

(43) Veröffentlichungstag der Anmeldung:
16.11.83 Patentblatt 83/46

(45) Bekanntmachung des Hinweises auf die Patenterteilung:
31.07.85 Patentblatt 85/31

(84) Benannte Vertragsstaaten:
AT CH DE FR GB IT LI NL SE

(56) Entgegenhaltungen:
DE - A - 1 816 848
FR - A - 2 451 530
GB - A - 1 111 471
US - A - 3 780 872

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Lippelt, Frank-Dietmar, Wissmannstrasse 10,
D-3000 Hannover 1 (DE)
Erfinder: Kiel, Bernd-Joachim, Barnestrasse 40,
D-3050 Wunstorf (DE)
Erfinder: König, Heinz-Werner, Luisenstrasse 6,
D-3013 Barsinghausen 8 (DE)
Erfinder: Deike, Karl-Heinz, Feldstrasse 17,
D-3017 Pattensen 5 (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Geräuschdämpfer für Ventileinrichtungen in Druckluftanlagen, insbesondere in Fahrzeugbremsanlagen, gemäß dem Oberbegriff des Anspruchs 1.

Geräuschdämpfer haben die Aufgabe, die Abblasgeräusche, welche z. B. beim Abblasen von überschüssiger Druckluft aus Druckluft-Bremsanlagen entstehen, auf einen vom Gesetzgeber vorgeschriebenen Schallpegel zu dämpfen. Dabei erfolgt der Einbau oder Anbau des Geräuschdämpfers in der Regel in bzw. an einer im Druckluft-Leitungssystem der Bremsanlage angeordneten Ventileinrichtung, welche funktionsbedingt in die Atmosphäre entlüftet. Insbesondere sind es Druckregler und Relaisventile, deren Aufgabe es ist, den Betriebs- oder Bremsdruck in Druckluft-Bremsanlagen zu regeln, welche mit einem Geräuschdämpfer ausgerüstet sind, da die nach Erreichen eines bestimmten Behälterdruckes oder bei Entlüftung der Bremszylinder mitunter schlagartige Entlüftung in die Atmosphäre laute Geräusche verursacht.

Bekannt sind Geräuschdämpfer, welche zwecks Dämpfung des Luftstromes aus in Hohlkörpern angeordneten Widerstands- bzw. Dämpfungselementen bestehen, welche aufgrund ihrer Querlage zum Luftstrom die Wegführung dieses Luftstromes umlenken.

Ein derartiger Geräuschdämpfer für Druckluft-Bremsgeräte ist durch die DE-A-2 922 677 bekannt. Diese geräuschdämpfende Einrichtung besteht aus einem geschlossenen Hohlkörper mit aus elastischem Material bestehenden Dämpfungselementen und mit durch die Wandung des Hohlkörpers führenden Luftaustrittskanälen.

Aufgrund der hohen Drücke muß das Dämpfungselement vor allem in Längsrichtung formstabil sein. Die mit Luftaustrittskanälen versehene Innenwandung des Hohlkörpers ist deshalb als formstabiler Stützkörper ausgebildet.

Die Herstellungskosten für ein derartiges mit einem Stützkörper versehenes Dämpfungselement sind verhältnismäßig groß. Weiterhin besteht bei dem um das Stützrohr in der Regel verwandten Material, wie Glasvlies, Filz, Steinwolle u. a., die Gefahr des Verstopfens.

Der Erfindung liegt deshalb die Aufgabe zugrunde, ein kostenmäßig günstiges Dämpfungselement zu schaffen, welches mit einfachen Mitteln wenigstens den gleichen Dämpfungseffekt wie die vorerwähnten Materialien erzielt und welches nicht zum Verstopfen neigt.

Diese Aufgabe wird durch die im Patentanspruch 1 aufgeführte Erfindung gelöst.

Vorteilhafte Weiterbildungen und Ausgestaltungen der Erfindung sind den Unteransprüchen zu entnehmen.

Die wesentlich kostengünstigere Struktur der erfindungsgemäßen Dämpfungspatrone hat den großen Vorteil, daß die axial auf die Patrone auftreffende, in Querrichtung zur Mitte strömende Druckluft verwirbelt wird. Da die Patrone auch bei schlagartiger Druckluftbeaufschlagung auch ohne Stützrohr formstabil bleibt und sich nicht in axialer Richtung zusammendrückt, ist dieser Wirbeleffekt auf der gesamten Patronenlänge vorhanden. Dabei ergeben sich weitere erwähnenswerte Vorteile, wie große Durchlässigkeit, geringer Staudruck, Selbstreinigungseffekt, d. h. geringe Gefahr des Zusetzens der Patrone, Verschleißfestigkeit, Temperaturbeständigkeit und Temperaturabhängigkeit.

Die dabei u. a. vorgeschlagene Lösung der Verwendung eines spiralförmig gewickelten Drahtgewebes in der gewünschten Patronenlänge stellt eine sehr kostengünstige Lösung dar, da die Webung automatisch die gewünschte Struktur einer wellenförmigen Ausbildung ergibt, wobei die Webkante gleichzeitig eine Sicherung gegen ein Entflechten der Patrone ergibt.

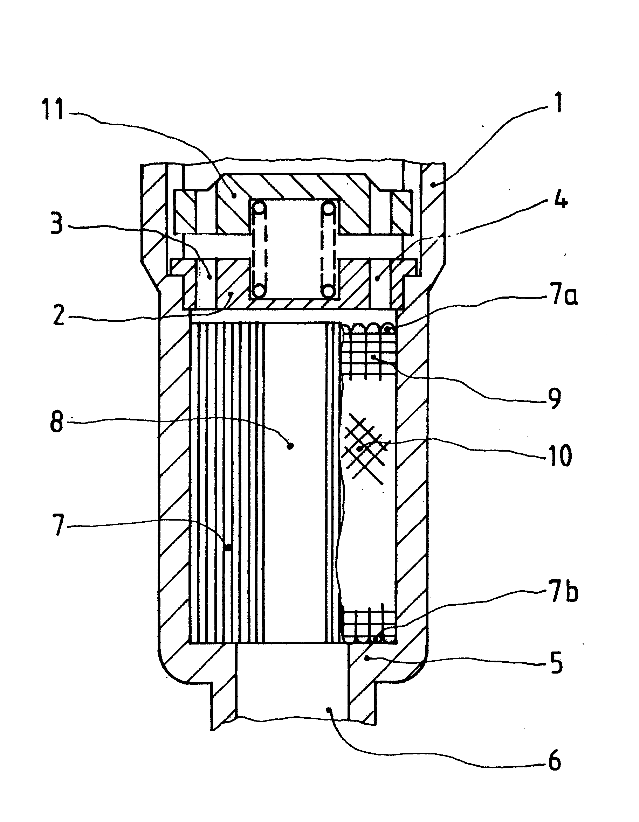

Die Erfindung soll anhand eines Ausführungsbeispieles, welches in der Zeichnung als Geräuschdämpfer eines Druckreglers dargestellt ist, näher erläutert werden, wobei zwei Maschenformen eingezeichnet sind.

Der dargestellte Geräuschdämpfer besteht aus einem Gehäuse 1, dessen erste Stirnwand 2 mit Einlaßöffnungen 3, 4 versehen ist und dessen zweite Stirnwand 5 einen Auslaß 6 aufweist. Zwischen der ersten und der zweiten Gehäusestirnwand 2, 5 befindet sich eine aus einem Metall-Drahtgewebe bestehende Dämpfungspatrone 7 mit einem innen durchdringenden Durchlaß 8, dessen Durchlaßende an der ersten Gehäusewand 2 gegenüber den Einlaßöffnungen 3, 4 versetzt ist. Die an der ersten Stirnwand 2 und an der zweiten Stirnwand 5 des Gehäuses 1 anliegenden Enden der Patrone 7 sind als Webkanten 7a und 7b ausgebildet. Die beiden verschiedenen Maschenformen sind mit den Indexzahlen 9 und 10 gekennzeichnet.

In dem hier dargestellten Ausführungsbeispiel verfügt der Geräuschdämpfer über eine oberhalb der ersten Gehäusestirnwand 2 angeordnete federnde Lochscheibe 11, welche jedoch in keiner Beziehung zu der hier beschriebenen Erfindung steht. Durch diese vorgeschaltete Lochscheibe 11 wird durch Stauung eine gewisse Vordämpfung erzielt, indem kurzfristig der freie Querschnitt verringert wird, was zur Folge hat, daß sich der Druck langsam abbaut und mehrfach umgelenkt in die nachgeschaltete Dämpfungsstufe fließt. Eine derartige Vordämpfung ist insbesondere für Hochdruckanlagen empfehlenswert.

Gemäß der Funktion trifft die Druckluft durch die Einlaßöffnungen 3, 4 auf die Webkante 7a des Drahtgewebes der Dämpfungspatrone 7 und durchdringt das Drahtgewebe in Längsrichtung und zum Durchlaß 8 hin in Querrichtung. Über den Durchlaß 8 verläßt die Druckluft den Geräuschdämpfer über dessen Auslaß 6 in die Atmosphäre.

In einer vorteilhaften Ausführungsform besteht das Material der Patrone 7 aus einem unebenen Lochblech, wobei die Unebenheiten aus noppenähnlichen, oder aus wellenförmigen Ausbildungen bestehen können.

In einer weiteren vorteilhaften Ausführungsform ist das Material der Patrone 7 spiralförmig aufgewickelt. Es kann auch aus hülsenförmigen, ineinandergesteckten formstabilen Teilen bestehen.

Das Material der verschiedenen Ausführungsformen der Patrone 7 kann auch aus Kunststoff bestehen.

## Patentansprüche

1. Geräuschdämpfer für Ventileinrichtungen in Druckluftanlagen, insbesondere in Druckluft-Bremsanlagen zur Dämpfung der beim Abblasen der überschüssigen über den Regeldruck geförderten Druckluft in die Atmosphäre entstehenden Geräusche, der folgende Merkmale umfaßt:

a) der Geräuschdämpfer besteht aus einem Gehäuse (1) mit mindestens einer Einlaßöffnung (3, 4) an der ersten Gehäusestirnwand (2);

b) im Innenraum des Gehäuses (1) ist Dämpfungsmaterial (7) vorgesehen;

c) wenigstens ein, im wesentlichen in Längsrichtung des Gehäuses (1) das Dämpfungsmaterial (7) durchdringender Durchlaß (8) verbindet die Einlaßöffnung bzw. Einlaßöffnungen (3, 4) mit einem Auslaß (6) der zweiten Gehäusestirnwand (5);

d) der Durchlaß (8) in dem Dämpfungsmaterial (7) ist derart angeordnet, daß das der ersten Gehäusestirnwand zugewandte Durchlaßende quer zur Längsrichtung des Gehäuses (1) gegenüber der Einlaßöffnung bzw. den Einlaßöffnungen (3, 4) versetzt ist,

gekennzeichnet durch folgende Merkmale:

e) das Dämpfungsmaterial besteht aus einer in Längsrichtung formstabilen, stützkörperfreien, hülsenförmigen Patrone (7);

f) der Außendurchmesser der Patrone (7) ist dem Innendurchmesser des Gehäuses (1) angepaßt;

g) die Patrone (7) besteht aus in Längsrichtung verlaufenden mehrschichtigen ringförmigen, in Querrichtung durchlässigen Materiallagen, wobei zwecks Durchlässigkeit in Längsrichtung das Material mit Erhebungen versehen ist.

2. Geräuschdämpfer nach Anspruch 1, gekennzeichnet durch folgende Merkmale:

a) das Material der Patrone (7) besteht aus unebenem Lochblech;

b) die Unebenheiten bestehen aus noppenähnlichen Ausbildungen des Lochbleches.

3. Geräuschdämpfer nach Anspruch 2, gekennzeichnet durch folgendes Merkmal: die Unebenheiten bestehen aus wellenförmigen Ausbildungen des Lochbleches.

4. Geräuschdämpfer nach Anspruch 1, gekennzeichnet durch folgende Merkmale:

a) das Material der Patrone (7) besteht aus Drahtgewebe, wobei sich die Unebenheiten aus der Webung ergeben;

b) die Sicherung gegen Entflechten des Drahtgewebes besteht aus einer Webkante.

5. Geräuschdämpfer nach einem der vorhergehenden Ansprüche, gekennzeichnet durch folgendes Merkmal: die Patrone (7) besteht aus mindestens einem spiralförmig aufgewickelten Teil.

6. Geräuschdämpfer nach einem der vorhergehenden Ansprüche, gekennzeichnet durch folgendes Merkmal: die Patrone (7) besteht aus ineinander gesteckten hülsenförmigen Teilen.

7. Geräuschdämpfer nach einem der vorhergehenden Ansprüche, gekennzeichnet durch folgendes Merkmal: das Material der Patrone (7) besteht aus Kunststoff.

## Claims

1. Silencer for valve devices in compressed-air systems, especially in compressed-air brake systems, for silencing the noise produced when supplied compressed air of excessive pressure is released to atmosphere, which silencer includes the following features:

a) the silencer comprises a housing (1) having at least one inlet opening (3, 4) at its first end wall (2);

b) silencing material (7) is provided in the interior space of the housing (1);

c) at least one passage (8), which penetrates the silencing material (7) substantially in the longitudinal direction of the housing (1), connects the inlet opening(s) (3, 4) to an outlet (6) in the second end wall (5) of the housing;

d) the passage (8) in the silencing material (7) is so arranged that its end facing the first end wall of the housing is displaced transversely with respect to the longitudinal direction of the housing (1) relative to the inlet opening(s) (3, 4),

characterised by the following features:

e) the silencing material comprises a sleeve-shaped cartridge (7) which is dimensionally stable in the longitudinal direction and which is free of supporting members;

f) the outside diameter of the cartridge (7) matches the inside diameter of the housing (1);

g) the cartridge (7) comprises a plurality of annular layers of material that extend in the longitudinal direction and are permeable in the transverse direction, the material having raised portions to provide permeability in the longitudinal direction.

2. Silencer according to claim 1, characterised by the following features:

a) the material of the cartridge (7) comprises uneven perforated plate material;
b) the uneven portions comprise knob-like projections from the perforated plate.

3. Silencer according to claim 2, characterised by the following feature: the uneven portions comprise wave-like projections from the perforated plate.

4. Silencer according to claim 1, characterised by the following features:

a) the material of the cartridge (7) comprises woven wire fabric, the uneven portions being produced by the weave;
b) the means of preventing the woven wire fabric from becoming unwoven comprises a selvedge.

5. Silencer according to any one of the preceding claims, characterised by the following feature: the cartridge (7) comprises at least one portion that is wound in the shape of a spiral.

6. Silencer according to any one of the preceding claims, characterised by the following feature: the cartridge (7) comprises sleeve-shaped portions that are inserted in one another.

7. Silencer according to any one of the preceding claims, characterised by the following feature: the material of the cartridge (7) comprises plastics.

**Revendications**

1. Silencieux pour robinets dans les circuits d'air comprimé, en particulier dans les installations de freinage d'air comprimé, pour amortir les bruits qui apparaissent lors de la purge dans l'atmosphère de l'air comprimé en excès au-delà de la pression de régulation, silencieux comportant les caractéristiques suivantes:

a) le silencieux est constitué d'un carter (1) présentant au moins une ouverture de sortie (3, 4) sur la première paroi frontale (2);
b) un matériau amortisseur (7) est prévu à l'intérieur du carter (1);
c) au moins un passage (8), qui traverse le matériau amortisseur (7) sensiblement dans la direction longitudinale du carter (1), relie l'ouverture d'entrée ou les ouvertures d'entrée (3, 4) à une sortie (6) de la seconde paroi frontale (5) du carter;
d) le passage (8) dans le matériau amortisseur (7) est disposé de façon que l'extrémité du passage tournée vers la première paroi frontale du carter soit décalée transversalement par rapport à la direction longitudinale du carter (1) par rapport à l'ouverture d'entrée ou aux ouvertures d'entrée (3, 4),

caractérisé par les caractéristiques suivantes:

e) le matériau amortisseur est constitué d'une cartouche (7) en forme de douille, de forme rigide en direction longitudinale sans élément de soutien;
f) le diamètre extérieur de la cartouche (7) est adapté au diamètre intérieur du carter (1);
g) la cartouche (7) est constituée de couches annulaires de matériau multicouche courant en direction longitudinale et perméables en direction transversale, étant précisé que ce matériau comporte des profils pour donner une perméabilité en direction longitudinale.

2. Silencieux selon la revendication 1, caractérisé par les caractéristique suivantes:

a) le matériau de la cartouche (7) est constitué de tôle perforée de surface inégale;
b) les inégalités sont constituées d'un genre de bossages de la tôle perforée.

3. Silencieux selon la revendication 2, caractérisé par la caractéristique suivante: les inégalités sont constituées de formations en onde de la tôle perforée.

4. Silencieux selon la revendication 1, caractérisé par les caractéristiques suivantes:

a) le matériau de la cartouche (7) est constitué de toile métallique, les inégalités provenant du tissage;
b) la sécurité à l'égard d'un détissage de la toile métallique est donnée par une lisière.

5. Silencieux selon l'une des revendications précédentes, caractérisé par la caractéristique suivante: la cartouche (7) est constituée d'au moins une pièce enroulée en spirale.

6. Silencieux selon l'une des revendications précédentes, caractérisé par la caractéristique suivante: la cartouche (7) est constituée de pièces en forme de douille qui s'enfilent l'une dans l'autre.

7. Silencieux selon l'une des revendications précédentes caractérisé par la caractéristique suivante: le matériau de la cartouche (7) est en plastique.